# EUROPÄISCHE PATENTSCHRIFT

(11) **EP 2 479 082 B1**
(45) Veröffentlichungstag und Bekanntmachung des Hinweises auf die Patenterteilung: **02.01.2019**
(21) Anmeldenummer: 12151143.0
(22) Anmeldetag: 13.01.2012
(51) Int. Cl.: B62B 3/00, E05B 63/22, E05B 65/10, E05C 9/04, E05C 19/02

(54) **Transportwagen mit Verschlussvorrichtung**
Transport trolley with locking device
Chariot de transport avec serrure

(30) Priorität: 21.01.2011 DE 102011002998
(43) Veröffentlichungstag der Anmeldung: 25.07.2012
(73) Patentinhaber: BLANCO Professional GmbH + Co KG, 75038 Oberderdingen (DE)
(72) Erfinder: Hipp, Wolfram, 75245 Neulingen (DE); Heidelberger, Helmut, 75015 Bretten (DE); Bittner, Miroslav, 73951 Dobrá (CZ)
(74) Vertreter: Hoeger, Stellrecht & Partner Patentanwälte mbB

(56) Entgegenhaltungen:
- DE-A1- 2 135 115
- DE-U1- 29 621 218
- US-A- 3 057 649

## Beschreibung

Die vorliegende Erfindung betrifft einen Transportwagen, der einen Korpus, mindestens eine Tür und eine Verschlussvorrichtung zum Zurückhalten der Tür in einer Schließstellung der Tür und einer Zurückhaltestellung der Verschlussvorrichtung umfasst.

Transportwagen mit solchen Verschlussvorrichtungen sind aus dem Stand der Technik bekannt.

Insbesondere gibt es Transportwagen mit Verschlussvorrichtungen, die nur durch eine Betätigung von außerhalb des Transportwagens von der Zurückhaltestellung in eine Freigabestellung bewegbar sind, in welcher die Tür geöffnet werden kann. Solche Transportwagen haben jedoch den Nachteil, dass eine versehentlich im Innenraum des Korpus eingeschlossene Person, beispielsweise ein spielendes Kind, die Tür nicht von innen öffnen kann, um aus dem Innenraum zu entkommen.

Ferner sind Transportwagen mit Verschlussvorrichtungen bekannt, welche zwar ein Öffnen der Tür vom Innenraum des Korpus aus ermöglichen, wobei es dann aber nicht möglich ist, die Verschlussvorrichtung in der Zurückhaltestellung zu arretieren, so dass die Gefahr besteht, dass sich die Tür, insbesondere bei einem Transportvorgang des Transportwagens, unabsichtlich öffnet.

Weiterhin offenbart die DE 296 21 218 U1 einen Transportwagen mit einer Verschlussvorrichtung gemäß dem Oberbegriff des Anspruchs 1.

Der vorliegenden Erfindung liegt die Aufgabe zugrunde, einen Transportwagen der eingangs genannten Art zu schaffen, der sowohl eine Öffnung der Tür von einem Innenraum des Korpus aus ermöglicht als auch eine sichere Verriegelung der Tür in ihrer Schließstellung während eines Transportvorgang des Transportwagens, und dabei einfach und sicher zu bedienen ist.

Diese Aufgabe wird bei einem Transportwagen mit den Merkmalen des Oberbegriffs von Anspruch 1 erfindungsgemäß dadurch gelöst, dass der Transportwagen eine Verschlusssteuerungsvorrichtung umfasst, die eine Arretierstellung aufweist, in welcher die Verschlusssteuerungsvorrichtung so mit der Verschlussvorrichtung zusammenwirkt, dass die Verschlussvorrichtung in ihrer Zurückhaltestellung arretiert ist,
und wobei die Verschlusssteuerungsvorrichtung zusätzlich eine Sicherheitsstellung aufweist, in welcher die Verschlusssteuerungsvorrichtung so mit der Verschlussvorrichtung zusammenwirkt, dass die Verschlussvorrichtung von ihrer Zurückhaltestellung in eine Freigabestellung bewegbar und die Tür von einem Innenraum des Korpus aus zu öffnen ist.

Der Erfindung liegt somit das Konzept zugrunde, in ein und demselben Verschlusssystem die Möglichkeit zur sicheren Verriegelung der Tür durch Arretierung der Verschlussvorrichtung in ihrer Zurückhaltestellung einerseits und die Möglichkeit zur Öffnung der Tür von dem Innenraum des Korpus andererseits zu integrieren.

Dabei kann insbesondere vorgesehen sein, dass die Tür in der Sicherheitsstellung durch Ausüben eines Drucks auf eine dem Innenraum des Korpus zugewandte Innenseite der Tür zu öffnen ist.

Bei einer bevorzugten Ausgestaltung der Erfindung ist vorgesehen, dass der Transportwagen mindestens ein Vorspannelement umfasst, welches in der Sicherheitsstellung der Verschlusssteuerungsvorrichtung die Verschlussvorrichtung in ihre Zurückhaltestellung vorspannt.

Ein solches Vorspannelement kann insbesondere ein Federelement umfassen.

Ein solches Federelement kann insbesondere als eine Zugfeder oder als eine Druckfeder ausgebildet sein.

Um die Tür in einfacher Weise öffnen zu können, kann ferner vorgesehen sein, dass die Verschlusssteuerungsvorrichtung zusätzlich zu der Arretierstellung und der Sicherheitsstellung eine Öffnungsstellung aufweist, in welcher die Verschlusssteuerungsvorrichtung so mit der Verschlussvorrichtung zusammenwirkt, dass die Verschlussvorrichtung sich in einer Freigabestellung befindet, in welcher die Tür von innen und/oder von außen zu öffnen ist.

Die Tür kann also in diesem Fall insbesondere dadurch geöffnet werden, dass die Verschlusssteuerungsvorrichtung von der Sicherheitsstellung in die Öffnungsstellung überführt wird.

Vorzugsweise ist dabei vorgesehen, dass die Verschlusssteuerungsvorrichtung ein Betätigungselement umfasst, das von außerhalb des Transportwagens für eine Betätigung zugänglich ist, wobei durch (vorzugsweise einhändige) Betätigung des Betätigungselements die Verschlusssteuerungsvorrichtung von der Sicherheitsstellung in die Öffnungsstellung überführbar ist.

Ein solches Betätigungselement kann insbesondere als ein, vorzugsweise drehbarer, Betätigungsgriff ausgebildet sein.

Der Transportwagen kann insbesondere mindestens ein Vorspannelement umfassen, welches die Verschlusssteuerungsvorrichtung von der Öffnungsstellung in die Sicherheitsstellung zurückbewegt.

Dabei kann es sich um dasselbe Vorspannelement handeln, welches in der Sicherheitsstellung der Verschlusssteuerungsvorrichtung die Verschlussvorrichtung in ihre Zurückhaltestellung vorspannt.

Bei einer bevorzugten Ausgestaltung der Erfindung umfasst die Verschlusssteuerungsvorrichtung ferner ein Betätigungselement, das von außerhalb des Transportwagens für eine Betätigung zugänglich ist, wobei durch (vorzugsweise einhändige) Betätigung des Betätigungselements die Verschlusssteuerungsvorrichtung von der Sicherheitsstellung in die Arretierstellung und/oder von der Arretierstellung in die Sicherheitsstellung überführbar ist.

Der Übergang der Verschlusssteuerungsvorrichtung zwischen deren verschiedenen Stellungen (Arretierstellung, Sicherheitsstellung und gegebenenfalls Öffnungsstellung) erfolgt dabei vorzugsweise durch Drehung eines Verschlusssteuerungselements, beispielsweise in Form einer Verschlusssteuerungsscheibe.

Um zu vermeiden, dass die Verschlusssteuerungsvorrichtung unbeabsichtigt die Sicherheitsstellung oder die Arretierstellung verlässt, ist es von Vorteil, wenn die Verschlusssteuerungsvorrichtung eine Sicherheitsstellungs-Rastvorrichtung zum Verrasten der Verschlusssteuerungsvorrichtung in der Sicherheitsstellung und/oder eine Arretierstellungs-Rastvorrichtung zum Verrasten der Verschlusssteuerungsvorrichtung in der Arretierstellung umfasst.

Die Verschlussvorrichtung umfasst vorzugsweise mindestens ein Verschlusselement, das in der Zurückhaltestellung der Verschlussvorrichtung so mit dem Korpus zusammenwirkt, dass die Tür in ihrer Schließstellung zurückgehalten wird.

Ein solches Verschlusselement ist vorzugsweise an der Tür des Transportwagens angeordnet. Auch die Verschlusssteuerungsvorrichtung ist vorzugsweise an der Tür des Transportwagens angeordnet.

Bei einer bevorzugten Ausgestaltung der Erfindung umfasst die Verschlussvorrichtung mindestens zwei Verschlusselemente, die in der Zurückhaltestellung der Verschlussvorrichtung so mit dem Korpus zusammenwirken, dass die Tür in ihrer Schließstellung zurückgehalten wird, wobei zwei dieser Verschlusselemente sich von der Verschlusssteuerungsvorrichtung aus in einander entgegengesetzte Richtungen erstrecken.

In diesem Fall ist die Verschlussvorrichtung als ein Zwei-Punkt-Verschluss ausgebildet. Eine solche Zwei-Punkt-Verschlussvorrichtung ist insbesondere dazu geeignet, die Tür während des Transports des Transportwagens auf einem Fahrzeug, insbesondere auf einem Lieferwagen oder Lastkraftwagen, sicher in der Schließstellung zurückzuhalten, also insbesondere auch bei der Einwirkung von großen Rüttel- und/oder Stoßkräften.

Dabei ist vorzugsweise vorgesehen, dass mindestens zwei Verschlusselemente über die Verschlusssteuerungsvorrichtung so miteinander gekoppelt sind, dass sie gleichzeitig in Eingriff und/oder außer Eingriff mit dem Korpus bringbar sind.

Die Verschlusssteuerungsvorrichtung umfasst vorzugsweise mindestens ein drehbar gehaltenes Verschlusssteuerungselement.

Dieses Verschlusssteuerungselement, das beispielsweise als eine Verschlusssteuerungsscheibe ausgebildet sein kann, ist vorzugsweise drehfest mit einem Betätigungselement der Verschlusssteuerungsvorrichtung verbunden, welches von außerhalb des Transportwagens für eine (vorzugsweise einhändige) Betätigung zugänglich ist.

Das vorzugsweise scheibenförmig ausgebildete Verschlusssteuerungselement ist vorzugsweise an der Tür des Transportwagens gehalten.

Insbesondere kann vorgesehen sein, dass das Verschlusssteuerungselement mindestens eine Verschlusssteuerkurve umfasst, mit welcher mindestens ein Verschlusselement der Verschlussvorrichtung in der Arretierstellung und in der Sicherheitsstellung (und gegebenenfalls auch in der Öffnungsstellung) der Verschlusssteuerungsvorrichtung in Eingriff steht.

Dabei kann insbesondere vorgesehen sein, dass in der Arretierstellung der Verschlusssteuerungsvorrichtung das Verschlusselement nicht relativ zu der Verschlusssteuerkurve bewegbar ist und in der Sicherheitsstellung der Verschlusssteuerungsvorrichtung das Verschlusselement relativ zu der Verschlusssteuerkurve bewegbar ist.

Dabei ist vorzugsweise vorgesehen, dass in der Sicherheitsstellung der Verschlusssteuerungsvorrichtung das Verschlusselement, insbesondere gegen die Rückstellkraft eines Vorspannelements, von der Verschlusssteuerkurve weg bewegbar ist.

Der Transportwagen mit der erfindungsgemäßen Verschlusssteuerungsvorrichtung bietet somit ein Verschlusssystem mit einer zusätzlich integrierten Funktion zur Entriegelung der Tür des Transportwagens von innen.

In einer definierten Stellung des Verschlusses, nämlich der Sicherheitsstellung, lässt sich die Tür, vorzugsweise gegen eine rückstellende Federkraft, von innen öffnen.

Wird der Transportwagen transportiert, so kann der Federmechanismus dadurch außer Kraft gesetzt werden, dass die Verschlusssteuerungsvorrichtung in eine zweite definierte Stellung, nämlich die Arretierstellung, gebracht wird, so dass die Tür in der Arretierstellung sicher verschlossen ist.

Ein Verschlusselement der Verschlusssteuerungsvorrichtung ist vorzugsweise durch eine Drehbewegung in mindestens zwei voneinander verschiedene definierte Positionen, nämlich die Arretierstellung und die Sicherheitsstellung, bringbar.

Vorzugsweise ist das Verschlusssteuerungselement in einer dieser definierten Positionen oder in beiden dieser definierten Positionen arretierbar oder verrastbar.

Wenn das Verschlusssteuerungselement sich in der Sicherheitsstellung befindet, kann bei einer bevorzugten Ausgestaltung der Erfindung ein Verschlusselement der Verschlussvorrichtung gegen eine Federkraft in eine in dem Verschlusssteuerungselement vorgesehene Aussparung hineinbewegt werden. Dadurch wird die Verschlussvorrichtung von der Zurückhaltestellung in die Freigabestellung überführt. Die Tür lässt sich somit in der Sicherheitsstellung der Verschlusssteuerungsvorrichtung gegen die Federkraft eines Vorspannelements von innen entriegeln.

Wenn das Verschlusssteuerungselement sich in der Arretierstellung befindet, kann bei einer bevorzugten Ausführungsform der Erfindung das Verschlusselement der Verschlussvorrichtung nicht in vertikaler Richtung, insbesondere nicht nach unten, bewegt werden. Hierdurch ist die Tür in der Arretierstellung der Verschlusssteuerungsvorrichtung sicher verriegelt.

Ein Vorspannelement, insbesondere eine Zugfeder oder eine Druckfeder, kann sowohl im Bereich eines korpusseitigen Endes eines Verschlusselements der Verschlussvorrichtung oder, alternativ hierzu, auch in der Nähe eines Verschlusssteuerungselements der Verschlusssteuerungsvorrichtung angeordnet sein.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung eines Transportwagens mit einer Tür, die durch eine Verschlussvorrichtung in einer Schließstellung zurückgehalten wird;
- Fig. 2: eine schematische Vorderansicht des Transportwagens aus Fig. 1, mit geschlossener Tür;
- Fig. 3: eine schematische perspektivische Darstellung des Transportwagens aus den Fig. 1 und 2, wobei die Tür nach Freigabe durch die Verschlussvorrichtung in eine vollständig geöffnete Stellung gebracht worden ist;
- Fig. 4: eine schematische Vorderansicht des Transportwagens aus Fig. 3, mit vollständig geöffneter Tür;
- Fig. 5: eine vergrößerte Darstellung des Bereichs I aus den Fig. 1 und 2, mit einem Betätigungselement einer Verschlusssteuerungsvorrichtung des Transportwagens;
- Fig. 6: einen schematischen Längsschnitt durch die Verschlusssteuerungsvorrichtung des Transportwagens;
- Fig. 7: eine schematische Vorderansicht eines Verschlusssteuerungselements der Verschlusssteuerungsvorrichtung, wobei sich die Verschlusssteuerungsvorrichtung in einer Arretierstellung befindet, in welcher die Verschlusssteuerungsvorrichtung so mit der Verschlussvorrichtung des Transportwagens zusammenwirkt, dass die Verschlussvorrichtung in ihrer Zurückhaltestellung, in welcher sie die Tür in der Schließstellung zurückhält, arretiert ist.
- Fig. 8: eine schematische Vorderansicht des Verschlusssteuerungselements der Verschlusssteuerungsvorrichtung aus Fig. 7, wobei die Verschlusssteuerungsvorrichtung sich in einer Sicherheitsstellung befindet, in welcher die Verschlusssteuerungsvorrichtung so mit der Verschlussvorrichtung zusammenwirkt, dass die Verschlussvorrichtung von ihrer Zurückhaltestellung in eine Freigabestellung bewegbar und die Tür vom Innenraum des Korpus aus zu öffnen ist;
- Fig. 9: eine schematische Vorderansicht des Verschlusselements aus den Fig. 7 und 8, wobei die Verschlussteuerungsvorrichtung sich in einer Öffnungsstellung befindet, in welcher die Verschlusssteuerungsvorrichtung so mit der Verschlussvorrichtung zusammenwirkt, dass die Verschlussvorrichtung sich in einer Freigabestellung befindet, in welcher die Tür von innen und/oder von außen zu öffnen ist;
- Fig. 10: eine schematische Vorderansicht eines Verschlusselements der Verschlussvorrichtung, wobei die Verschlussvorrichtung sich in der Zurückhaltestellung befindet;
- Fig. 11: eine der Fig. 10 entsprechende schematische Vorderansicht des Verschlusselements der Verschlussvorrichtung, wobei die Verschlussvorrichtung sich in der Freigabestellung befindet;
- Fig. 12: einen gegenüber der Darstellung der Fig. 10 um 90° gedrehten schematischen vertikalen Schnitt durch die Verschlussvorrichtung, wobei die Verschlussvorrichtung sich in der Zurückhaltestellung befindet; und
- Fig. 13: einen gegenüber der Darstellung der Fig. 11 um 90° gedrehten schematischen vertikalen Schnitt durch die Verschlussvorrichtung, wobei die Verschlussvorrichtung sich in der Freigabestellung befindet.

Gleiche oder funktional äquivalente Elemente sind in allen Figuren mit denselben Bezugszeichen bezeichnet.

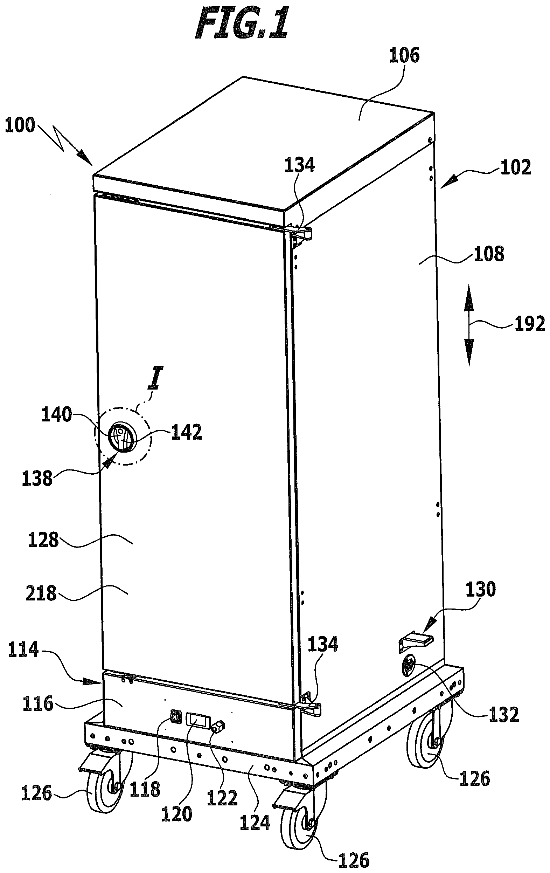

Ein in den Fig. 1 bis 13 dargestellter, als Ganzes mit 100 bezeichneter Transportwagen, insbesondere ein Speisentransportwagen, beispielsweise ein Bankettwagen, umfasst einen Korpus 102 mit einer Bodenwand 104, mit einer Deckenwand 106, mit zwei die Bodenwand 104 und die Deckenwand 106 miteinander verbindenden vertikalen Seitenwänden 108 und mit einer die beiden Seitenwände 108 und ebenfalls die Bodenwand 104 und die Deckenwand 106 miteinander verbindenden Rückwand (siehe insbesondere die Fig. 1 bis 4).

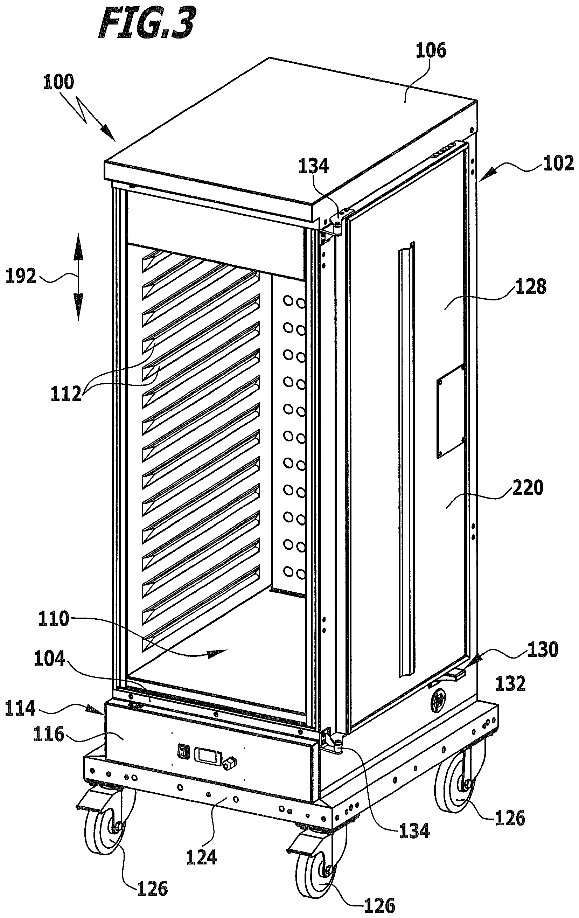

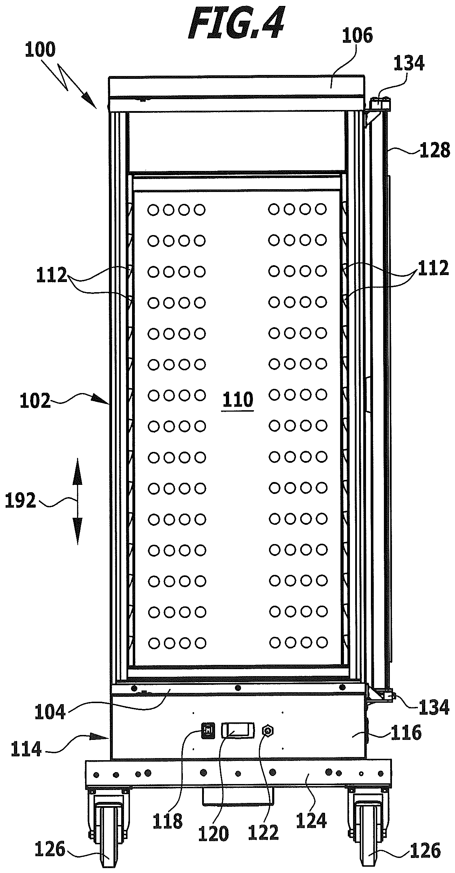

Ein Innenraum 110 des Korpus 102 (siehe die Fig. 3 und 4) dient der Aufnahme von Speisenbehältern mit darin aufgenommenen Speisen und/oder Getränkebehältern mit darin aufgenommenen Getränken sowie gegebenenfalls von Tabletts, auf denen solche Speisenbehälter und/oder Getränkebehälter angeordnet werden können.

Um in dem Innenraum 110 jeweils mehrere solcher Speisenbehälter, Getränkebehälter und/oder Tabletts übereinander anordnen zu können, sind die Innenseiten der Seitenwände 108 mit einander paarweise gegenüberliegenden Auflagevorsprüngen 112 versehen, wobei auf jedes Paar einander gegenüberliegender Auflagevorsprünge 112 jeweils ein Speisenbehälter, Getränkebehälter oder Tablett in horizontaler Ausrichtung auflegbar ist.

Längs der Auflagevorsprünge 112 kann der aufgelegte Behälter oder das aufgelegte Tablett ferner aus dem Innenraum 110 herausgezogen oder in den Innenraum 110 eingeschoben werden.

Unterhalb der Bodenwand 104 des Korpus 102 ist eine Aufnahmekammer 114 für Bestandteile einer Temperiervorrichtung des Transportwagens 100 angeordnet, welche seitlich und an ihrer Rückseite durch Verlängerungen der Seitenwände 108 bzw. der Rückwand des Korpus 102 und nach vorne hin durch eine Frontplatte 116 begrenzt ist.

Die Temperiervorrichtung kann eine Kühlvorrichtung zum Kühlen des Innenraums 110 und/oder eine Heizvorrichtung zum Erwärmen des Innenraums 110 des Transportwagens 100 umfassen.

An der Frontplatte 116 können beispielsweise ein Netzschalter 118 zum Ein- und Ausschalten der Temperiervorrichtung, ein Regler 120 für die Temperiervorrichtung und eine zugentlastende Durchführung 122 für ein (nicht dargestelltes) Netzkabel der Temperiervorrichtung angeordnet sein.

Die Aufnahmekammer 114 ruht auf einer Plattform 124, die an ihrer Unterseite mit mehreren, beispielsweise vier, Fahrrollen 126 versehen ist, um eine Verfahrbewegung des Transportwagens 100 zu ermöglichen.

Über die Fahrrollen 126 stützt sich der Transportwagen 100 an einem Untergrund ab.

Der Innenraum 110 des Korpus 102 ist mittels einer Tür 128 verschließbar.

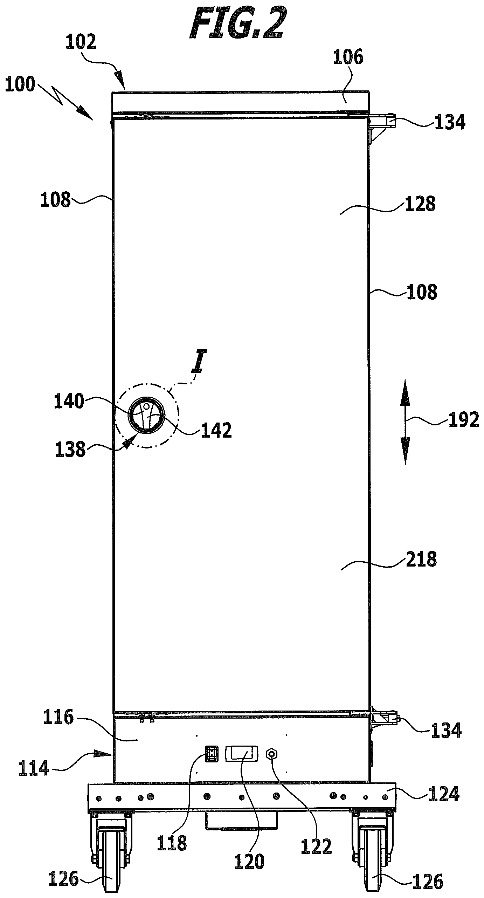

Dabei ist in den Fig. 1 und 2 die Tür 128 in einer Schließstellung dargestellt, in welcher die Tür 128 den Innenraum 110 des Korpus 102 verschließt, während die Tür 128 in den Fig. 3 und 4 in einer von der Schließstellung der Tür 128 verschiedenen Offenstellung der Tür 128 dargestellt ist, in welcher der Innenraum 110 für einen Belade- oder Entladevorgang von außen zugänglich ist. Insbesondere zeigen die Fig. 3 und 4 eine vollständig geöffnete Stellung der Tür 128, in welcher eine Außenseite der Tür 128 an einer Außenseite einer Seitenwand 108 des Korpus 102 anliegt.

In dieser vollständig geöffneten Stellung ist die Tür 128 gegenüber ihrer Schließstellung um einen Winkel von ungefähr 270° um ihre vertikale Schwenkachse verschwenkt.

In dieser vollständig geöffneten Stellung ist die Tür 128 mittels einer an der Seitenwand 108 angeordneten Rasteinrichtung 130 verrastbar.

Ferner kann an einer der Seitenwände 108, beispielsweise unterhalb der Rasteinrichtung 130, eine Aufnahme 132 für einen (nicht dargestellten) Stecker des Netzkabels der Temperiervorrichtung des Transportwagens 100 vorgesehen sein. In diese Aufnahme 132 kann der Stecker des Netzkabels eingesteckt werden, wenn die Temperiervorrichtung, beispielsweise während eines Transportvorgangs des Transportwagens 100, nicht an das Stromnetz angeschlossen ist.

Die Tür 128 ist an dem Korpus 102 durch Scharniere 134 angelenkt.

Ferner ist die Tür 128 mit einer Verschlussvorrichtung 136 versehen, welche die Tür 128 in ihrer Schließstellung zurückhält.

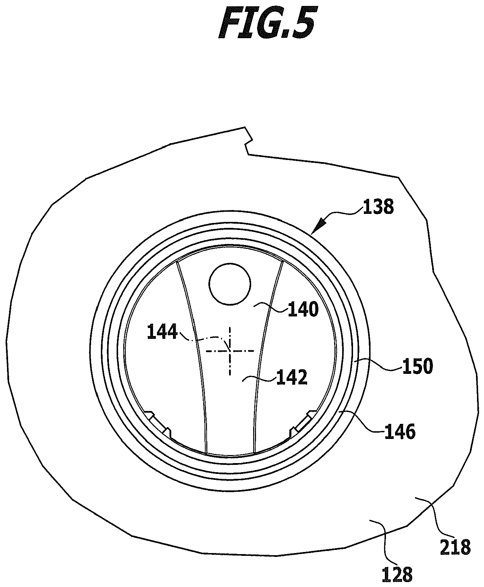

Die Funktion dieser Verschlussvorrichtung 136 wird mittels einer im folgenden noch näher zu beschreibenden Verschlusssteuerungsvorrichtung 138 gesteuert, welche ein an der Tür 128 angeordnetes und von außerhalb des Transportwagens 100 für eine Betätigung zugängliches Betätigungselement 140 umfasst. Die Verschlusssteuerungsvorrichtung 138 mit dem Betätigungselement 140 ist in den Fig. 5 bis 9 im Detail dargestellt.

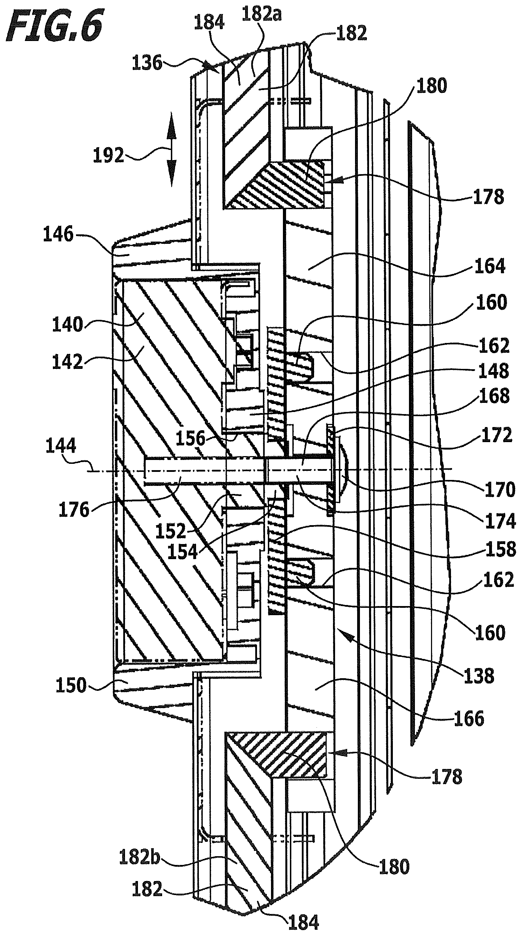

Das Betätigungselement 140 umfasst einen Betätigungsgriff 142, der um eine - beispielsweise im Wesentlichen horizontal ausgerichtete - Drehachse 144 der Verschlusssteuerungsvorrichtung 138 drehbar ist (siehe insbesondere Fig. 6).

Der Betätigungsgriff 142 ist in einem ortsfesten Gehäuse 146 aufgenommen, welches eine im Wesentlichen zylindrische Bodenplatte 148 (siehe Fig. 6) und eine von der Bodenplatte 148 nach vorne abstehende, den Betätigungsgriff 142 ringförmig umgebende Umfangswand 150 umfasst.

Das Gehäuse 146 ist in eine Aussparung an der Außenseite der Tür 128 eingesetzt und in dieser Position verrastet.

Der Betätigungsgriff 142 ist an seiner der Bodenplatte zugewandten Rückseite mit einem Mitnehmervorsprung 152 versehen, welcher eine Durchtrittsöffnung in der Bodenplatte 148 des Gehäuses 146 durchsetzt und an seinem freien Ende als ein Mehrkant 154, beispielsweise als ein Vierkant, ausgebildet ist, der in eine hierzu komplementäre Ausnehmung 156 in einer Mitnahmescheibe 158 eingreift, so dass der Betätigungsgriff 142 und die Mitnahmescheibe 158 drehfest miteinander verbunden und beide relativ zu dem Gehäuse 146 um die Drehachse 144 drehbar sind.

Die Mitnahmescheibe 158 ist an ihrer dem Gehäuse 146 abgewandten Rückseite mit mehreren Mitnehmerzapfen 160 versehen, welche in hierzu komplementäre Ausnehmungen 162 in einem als Verschlusssteuerungsscheibe 164 ausgebildeten Verschlusssteuerungselement 166 eingreifen, so dass das Verschlusssteuerungselement 166 und die Mitnahmescheibe 158 drehfest miteinander verbunden sind und gemeinsam mit dem Betätigungsgriff 142 um die Drehachse 144 der Verschlusssteuerungsvorrichtung 138 drehbar sind.

Das Verschlusssteuerungselement 166, die Mitnahmescheibe 158 und der Betätigungsgriff 142 sind ferner in der Axialrichtung der Drehachse 144 durch ein Befestigungsmittel 168, beispielsweise eine Befestigungsschraube, miteinander verbunden.

Das Befestigungsmittel 168 liegt mit einem Kopfteil 170, vorzugsweise über eine Unterlegscheibe 172, an der der Mitnahmescheibe 158 abgewandten Rückseite des Verschlusssteuerungselements 166 an, durchsetzt mit einem Schaftteil 174 eine Durchtrittsöffnung im Verschlusssteuerungselement 166 und ist mit einem Gewindeteil 176 in eine hierzu komplementäre Gewindesackbohrung des Betätigungsgriffs 142 eingedreht.

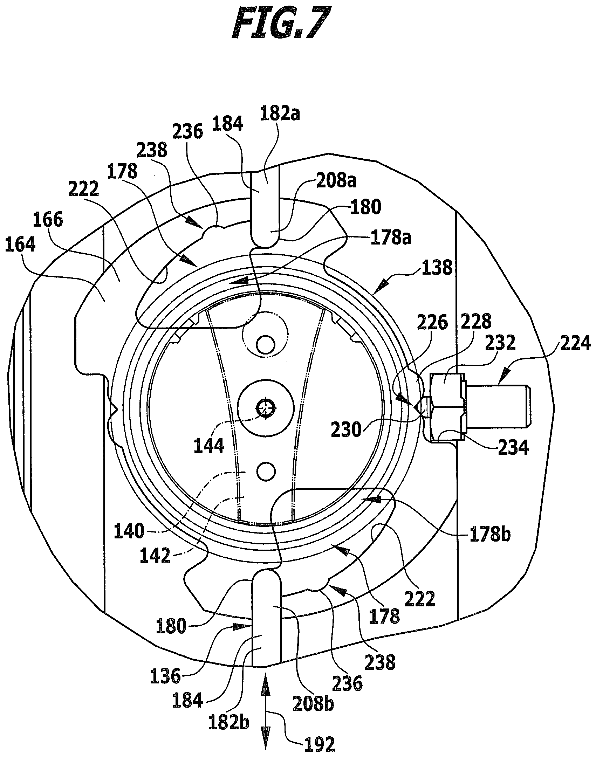

Wie aus den Fig. 7 bis 9 zu sehen ist, welche Vorderansichten des Verschlusssteuerungselements 166 in verschiedenen Stellungen zeigen, weist das Verschlusssteuerungselement 166 zwei einander bezüglich der Drehachse 144 diametral gegenüberliegende, vorzugsweise bezüglich der Drehachse 144 im Wesentlichen achsensymmetrische, Verschlusssteuerungsöffnungen 178 auf.

Wie am besten aus Fig. 6 zu ersehen ist, greift in jede der Verschlusssteuerungsöffnungen 178 jeweils ein axialer Endabschnitt 180 eines Verschlussgestänges 182 ein.

Das obere Verschlussgestänge 182a umfasst ferner einen vertikalen Abschnitt 184, welcher sich von dem axialen Endabschnitt 180 aus im Wesentlichen vertikal nach oben erstreckt.

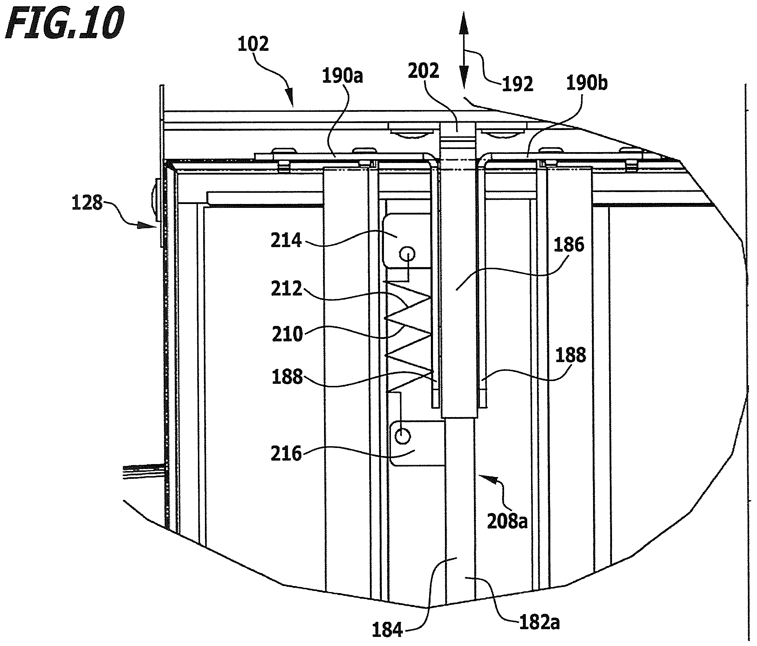

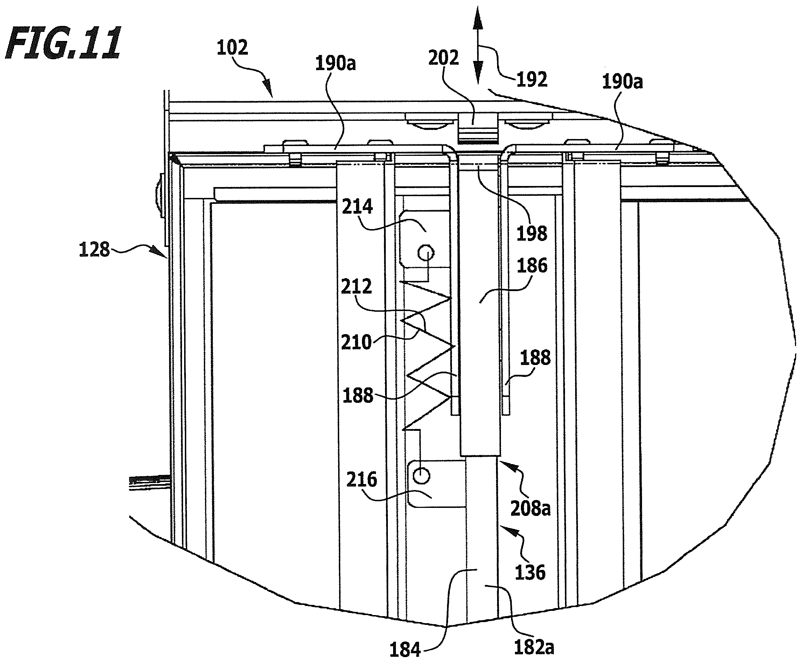

Wie aus den Fig. 10 und 11 zu ersehen ist, ist am oberen Ende des Verschlussgestänges 182a ein Verschlussriegel 186 festgelegt.

Der Verschlussriegel 186 kann insbesondere durch Verschweißung mit dem Verschlussgestänge 182a verbunden sein.

Der Verschlussriegel 186 ist zwischen vertikalen Schenkeln 188 eines ersten Führungswinkels 190a und eines zweiten Führungswinkels 190b längs der Vertikalen 192 verschieblich geführt.

Die Führungswinkel 190a und 190b sind mittels geeigneter Befestigungsmittel, beispielsweise Befestigungsschrauben, an der Oberseite der Tür 128 festgelegt (siehe insbesondere die Fig. 10 und 11).

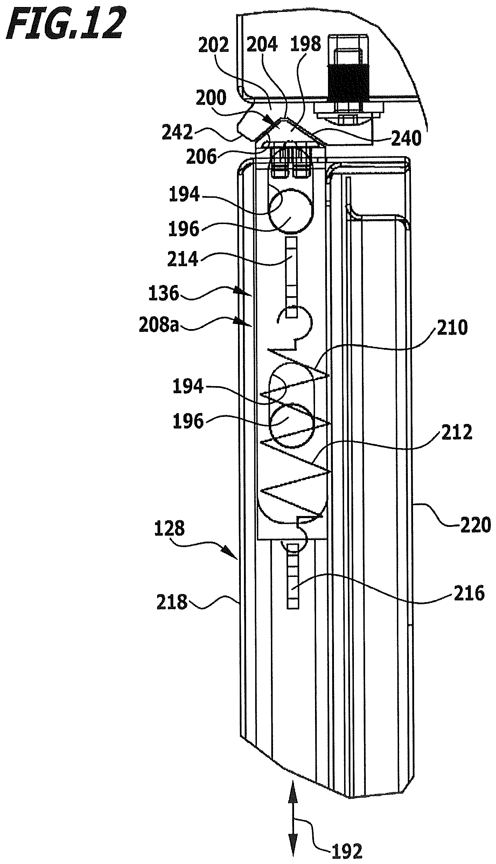

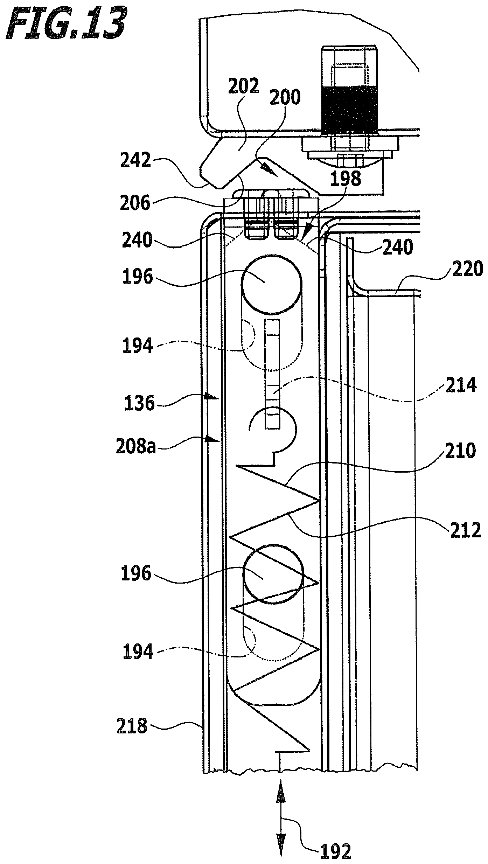

Wie aus den Fig. 12 und 13 zu ersehen ist, weist der Verschlussriegel 186 zwei sich in vertikaler Richtung erstreckende Langlöcher 194 auf, welche von jeweils einem Führungszapfen 196 durchsetzt werden, der sich von dem vertikalen Schenkel 188 des ersten Führungswinkels 190a zu dem vertikalen Schenkel 188 des zweiten Führungswinkels 190b erstreckt.

Die Führungszapfen 196 weisen jeweils einen Durchmesser auf, welcher der Erstreckung des jeweils zugeordneten Langlochs 194 in der horizontalen Richtung entspricht.

Hierdurch ist der Verschlussriegel 186 exakt nur in der vertikalen Richtung verschieblich geführt.

Ferner begrenzen die Führungszapfen 196 zusammen mit den jeweils zugeordneten Langlöchern 194 den Verschiebungsweg des Verschlussriegels 186.

In der in Fig. 12 dargestellten Zurückhaltestellung der Verschlussvorrichtung 136 liegen die Führungszapfen 196 am unteren Rand des jeweils zugeordneten Langlochs 194 an, so dass der Verschlussriegel 186 sich in seiner oberen Endstellung befindet.

In der in Fig. 13 dargestellten Freigabestellung der Verschlussvorrichtung 136 liegen die Führungszapfen 196 an dem oberen Rand des jeweils zugeordneten Langlochs 194 an, so dass sich der Verschlussriegel 186 in seiner unteren Endstellung befindet.

Wie am besten aus Fig. 12 zu ersehen ist, weist der Verschlussriegel 186 eine sich verjüngende Spitze 198 auf, die in der Zurückhaltestellung der Verschlussvorrichtung 136 in eine im Wesentlichen komplementär zur Spitze 198 ausgebildete Aufnahmeausnehmung 200 eines an der Deckenwand 106 des Korpus 102 angeordneten Aufnahmeelements 202 eingreift.

Dabei liegt in der Zurückhaltestellung der Verschlussvorrichtung 136 eine gegen die Vertikale 192 geneigte Anlagefläche 204 der Spitze 198 des Verschlussriegels 186 an einer ebenfalls gegenüber der Vertikalen 192 geneigten Anschlagfläche 206 der Aufnahmeausnehmung 200 an.

In der in Fig. 13 dargestellten Freigabestellung der Verschlussvorrichtung 136 ist hingegen die Spitze 198 des Verschlussriegels 186 so weit nach unten zurückgezogen, dass sie nicht mehr in die Aufnahmeausnehmung 200 des Aufnahmeelements 202 eingreift, so dass die Tür 128 aus ihrer Schließstellung herausgeschwenkt werden kann.

Wie am besten aus den Fig. 10 und 11 zu ersehen ist, ist das aus dem Verschlussgestänge 182a und dem Verschlussriegel 186 gebildete obere Verschlusselement 208a der Verschlussvorrichtung 136 mittels eines Vorspannelements 210 elastisch in die Zurückhaltestellung vorgespannt.

Das Vorspannelement 210 ist beispielsweise als eine Zugfeder 212 ausgebildet, deren erstes Ende an einer mit dem ersten Führungswinkel 190a verbundenen ersten Haltelasche 214 und deren zweites Ende an einer mit dem Verschlusselement 208a, insbesondere mit dem oberen Verschlussgestänge 182a, verbundenen zweiten Haltelasche 216 festgelegt ist.

Da die Zugfeder 212 bestrebt ist, sich zusammenzuziehen und somit den Abstand zwischen der ersten Haltelasche 214 und der zweiten Haltelasche 216 zu verkürzen, spannt die Zugfeder 212 das Verschlusselement 208a in die in den Fig. 10 und 12 dargestellte Zurückhaltestellung der Verschlussvorrichtung 136 vor.

Wie am besten aus den Fig. 12 und 13 zu ersehen ist, ist das obere Verschlusselement 208a mit dem Vorspannelement 210 und den vertikalen Schenkeln 188 der Führungswinkel 190a und 190b im Zwischenraum zwischen einer dem Innenraum 110 des Korpus 102 abgewandten Außenschale 218 und einer dem Innenraum 110 zugewandten Innenschale 220 der Tür 128 angeordnet.

Der Großteil des verbleibenden Zwischenraums zwischen der Außenschale 218 und der Innenschale 220 ist mit einem (nicht dargestellten) Isoliermaterial, beispielsweise einem Polyurethan-Schaum, ausgefüllt.

Die Außenschale 218 und die Innenschale 220 der Tür 128 sowie der Korpus 102 des Transportwagens 100 sind vorzugsweise aus einem metallischen Material, insbesondere aus einem Edelstahlmaterial, gebildet.

Die Verschlussvorrichtung 136 umfasst ferner ein unteres Verschlusselement 208b, welches ebenso aufgebaut ist wie das obere Verschlusselement 208a und mit einem Aufnahmeelement an der Bodenwand 104 des Korpus 102 zusammenwirkt, um die Tür 128 in ihrer Schließstellung zurückzuhalten.

Die Verschlussvorrichtung 136 ist somit als ein Zwei-Punkt-Verschluss ausgebildet.

Auch das untere Verschlusselement 208b wird mittels eines Vorspannelements 210, beispielsweise in Form einer Zugfeder 212, in die Zurückhaltestellung vorgespannt.

Vorzugsweise ist das untere Verschlusselement 208b bezüglich der Drehachse 144 der Verschlusssteuerungsvorrichtung 138 achsensymmetrisch zu dem oberen Verschlusselement 208a ausgebildet und angeordnet.

Die Funktion der Verschlussvorrichtung 136 wird mittels der Verschlusssteuerungsvorrichtung 138 gesteuert, indem das Verschlusssteuerungselement 166 in die in den Fig. 7 bis 9 dargestellten Positionen gebracht wird.

Dabei liegt das nach oben vorgespannte obere Verschlusselement 208a bei einer Drehung des Verschlusssteuerungselements 166 um die Drehachse 144 mit seinem axialen Endabschnitt 180 am oberen Rand der oberen Verschlusssteuerungsöffnung 178a an, solange keine zusätzliche Kraft auf das obere Verschlusselement 208a einwirkt, so dass dieser obere Rand der oberen Verschlusssteuerungsöffnung 178a eine Verschlusssteuerkurve 222 bildet.

In entsprechender Weise liegt das untere Verschlusselement 208b mit seinem axialen Endabschnitt 180 an dem unteren Rand der unteren Verschlusssteuerungsöffnung 178b an, solange keine zusätzliche äußere Kraft auf das untere Verschlusselement 208b einwirkt, so dass dieser untere Rand der unteren Verschlusssteuerungsöffnung 178b ebenfalls eine Verschlusssteuerkurve 222 bildet.

In der in Fig. 7 dargestellten Arretierstellung der Verschlusssteuerungsvorrichtung 138 befinden sich die axialen Endabschnitte 180 der Verschlusselemente 208a, 208b in einem ersten Endbereich der Verschlusssteuerkurve 222, in welchem die vertikale Ausdehnung der jeweils zugeordneten Verschlusssteuerungsöffnung 178 im Wesentlichen der vertikalen Ausdehnung des axialen Endabschnitts 180 entspricht, so dass die Verschlusselemente 208a und 208b in dieser Arretierstellung nicht in vertikaler Richtung relativ zu dem Verschlusssteuerungselement 166 bewegt werden können, sondern in ihrer in den Fig. 10 und 12 dargestellten Zurückhaltestellung arretiert sind. In dieser Arretierstellung der Verschlusssteuerungsvorrichtung 138 kann somit die Tür 128 weder von außen noch von innen geöffnet, das heißt von der Schließstellung in eine Offenstellung bewegt, werden.

Die Tür 128 ist somit in dieser Arretierstellung der Verschlusssteuerungsvorrichtung 138 sicher verschlossen, so dass der Transportwagen 100 in dieser Arretierstellung insbesondere sicher transportiert werden kann, ohne dass die Gefahr besteht, dass sich die Tür 128 ungewollt öffnen lässt. Die Tür 128 ist somit in der Arretierstellung sicher verriegelt.

Um zu verhindern, dass sich die Verschlusssteuerungsvorrichtung 138 unbeabsichtigt aus der Arretierstellung löst, ist eine Arretierstellungs-Rastvorrichtung 224 vorgesehen, welche eine Einbuchtung 226 am Umfang des Verschlusssteuerungselements 266 sowie eine in der Drehrichtung des Verschlusssteuerungselements 166 neben der Einbuchtung 226 liegende Ausbuchtung 228 sowie eine in der Arretierstellung in die Einbuchtung 226 eingreifende Rastnase 230 umfasst.

Die Rastnase 230 ist in einer an der Tür 128 festgelegten Führungsbuchse 232 in radialer Richtung (bezogen auf die Drehachse 144 des Verschlusssteuerungselements 166) verschieblich geführt und wird mittels eines (nicht dargestellten) Federelements gegen den Umfang des Verschlusssteuerungselements 166 elastisch vorgespannt.

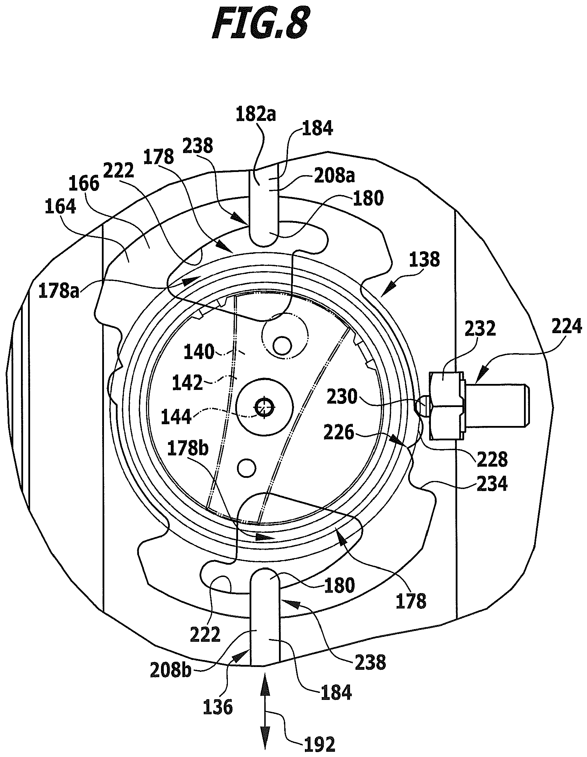

Um das Verschlusssteuerungselement 166 aus der in Fig. 7 dargestellten Arretierstellung in die in Fig. 8 dargestellte Sicherheitsstellung zu überführen, muss also zunächst die Rückstellkraft des Federelements überwunden werden, welche entsteht, wenn die Rastnase 230 durch die Ausbuchtung 228 am Umfang des Verschlusssteuerungselements 166 radial nach außen gedrückt wird.

Ferner bildet die Führungsbuchse 232 der Arretierstellungs-Rastvorrichtung 224 einen Anschlag für eine Anschlagfläche 234 am Umfang des Verschlussteuerungselements 166, welche in der Arretierstellung an der Führungsbuchse 232 anliegt (siehe Fig. 7), so dass das Verschlusssteuerungselement 166 nicht über die Arretierstellung hinaus (in der Darstellung der Fig. 7 im Gegenuhrzeigersinn) gedreht werden kann.

Durch Drehung des Verschlusssteuerungselements 166 mittels des Betätigungselements 140 durch eine Bedienungsperson von außerhalb des Transportwagens 100 ist die Verschlusssteuerungsvorrichtung 138 von der in Fig. 7 dargestellten Arretierstellung in die in Fig. 8 dargestellte Sicherheitsstellung überführbar (im gezeigten Ausführungsbeispiel durch eine Drehung im Uhrzeigersinn).

Aufgrund der Vorspannung der Verschlusselemente 208a und 208b in die Zurückhaltestellung folgen dabei die axialen Endabschnitte 180 der Verschlusselemente 208a und 208b den Verschlusssteuerkurven 222 bis zu einer Ausbuchtung 236 (siehe Fig. 7) der jeweils zugeordneten Verschlusssteuerungsöffnung 178, in welcher der jeweilige axiale Endabschnitt 180 des Verschlusselements 208a bzw. 208b einrastet.

Die Ausbuchtungen 236 bilden somit zusammen mit dem jeweiligen axialen Endabschnitt 180 des zugeordneten Verschlusselements 208a bzw. 208b jeweils eine Sicherheitsstellungs-Rastvorrichtung 238, durch welche die Verschlusssteuerungsvorrichtung 138 in der Sicherheitsstellung verrastbar ist.

In der Sicherheitsstellung der Verschlusssteuerungsvorrichtung 138 ist die vertikale Ausdehnung der Verschlusssteuerungsöffnungen 178 größer als die vertikale Ausdehnung der axialen Endabschnitte 180 der Verschlusselemente 208a und 208b, so dass die Verschlusselemente 208a und 208b gegen die Rückstellkraft der Vorspannelemente 210 aus der in den Fig. 10 und 12 dargestellten Zurückhaltestellung in die in den Fig. 11 und 13 dargestellte Freigabestellung bewegt werden können.

Dies kann insbesondere dadurch erfolgen, dass eine im Innenraum 110 des Korpus 102 befindliche Person von innen gegen die Tür 128 drückt. In diesem Fall wird die Spitze 198 jedes Verschlussriegels 186 gegen die geneigte Anschlagfläche 206 der jeweils zugeordneten Aufnahmeausnehmung 200 gedrückt (siehe insbesondere Fig. 12), so dass die geneigte Anschlagfläche 204 der Spitze 198 des jeweiligen Verschlussriegels 186 entlang der Anschlagfläche 206 der Aufnahmeausnehmung 200 nach unten (im Falle des oberen Verschlusselements 208a) bzw. nach oben (im Falle des unteren Verschlusselements 208b) abgleitet, wodurch der Verschlussriegel 186 des oberen Verschlusselements 208a gegen die elastische Rückstellkraft des Vorspannelements 210 (Zugfeder 212) nach unten und der Verschlussriegel 186 des unteren Verschlusselements 108b gegen die elastische Rückstellkraft des Vorspannelements 210 nach oben bewegt wird, bis beide Verschlusselemente 208a und 208b die in den Fig. 11 und 13 dargestellte Freigabestellung erreicht haben und die Tür 128 in eine Offenstellung bewegbar ist.

Der Verschluss der Tür 128 lässt sich somit in der Sicherheitsstellung der Verschlusssteuerungsvorrichtung 138 gegen die Federkraft der Vorspannelemente 210 durch eine im Innenraum 110 des Korpus 102 des Transportwagens 100 befindliche Person, beispielsweise ein im Innenraum 110 eingeschlossenes spielendes Kind, mittels Ausübung eines Druckes gegen die Tür 128 von innen öffnen.

Dabei werden die axialen Endabschnitte 180 der Verschlusselemente 208a und 208b in das Innere der jeweils zugeordneten Verschlusssteuerungsöffnung 178, zu der Drehachse 144 hin, bewegt, wodurch die Verschlussvorrichtung 136 von der Zurückhaltestellung in die Freigabestellung überführt und die Tür 128 somit entriegelt wird.

Durch die Sicherheitsstellungs-Rastvorrichtungen 238 ist die Verschlusssteuerungsvorrichtung 138 in der Sicherheitsstellung arretiert, so dass sie nicht unbeabsichtigt in die Arretierstellung, in welcher kein Öffnen der Tür 128 vom Innenraum 110 aus möglich ist, übergehen kann.

In der Sicherheitsstellung der Verschlusssteuerungsvorrichtung 138 ist auch ein Schließen der Tür 128, das heißt die Überführung der Tür von einer Offenstellung in die Schließstellung, ohne Weiteres möglich. Bei einem solchen Schließvorgang gleitet eine hintere Anschlagfläche 240 der Spitze 198 des Verschlussriegels 186 an einer vorderen Anschlagfläche 242 des Aufnahmeelements 202 (siehe Fig. 12) ab, um das in der Offenstellung der Tür 128 in die Zurückhaltestellung vorgespannte Verschlusselement 208a bzw. 208b wieder in die Freigabestellung zu bringen, in welcher die Spitze 198 des jeweiligen Verschlusselements 208a, 208b an dem jeweils zugeordneten Aufnahmeelement 202 vorbei bewegt werden kann, bis die Schließstellung der Tür 128 erreicht ist und die Spitze 198 des Verschlussriegels 186 von dem jeweiligen Vorspannelement 210 wieder in die jeweils zugeordnete Aufnahmeausnehmung 200 des Aufnahmeelements 202 hineinbewegt werden kann, um die Tür 128 in ihrer Schließstellung zurückzuhalten.

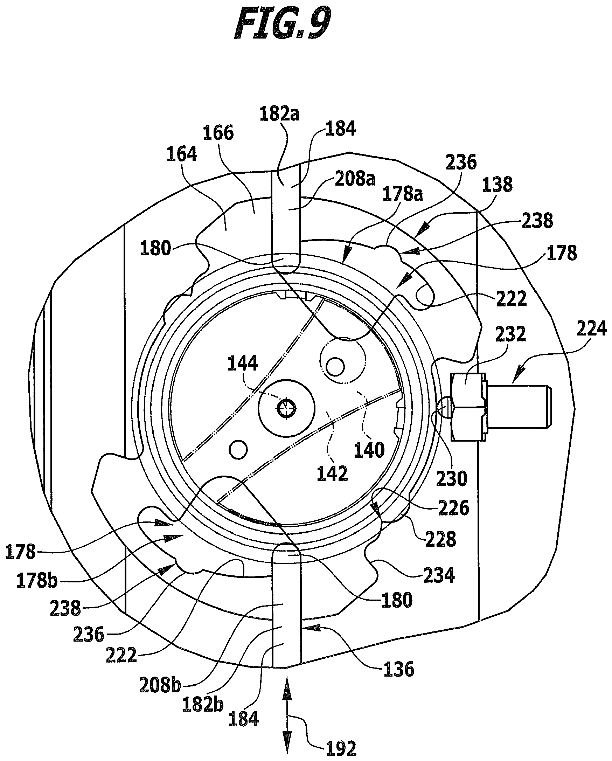

Von außen kann die Tür 128 dadurch geöffnet werden, dass die Verschlusssteuerungsvorrichtung 138 von der in Fig. 8 dargestellten Sicherheitsstellung in die in Fig. 9 dargestellte Öffnungsstellung überführt wird, und zwar durch Drehen des Betätigungselements 140 von außerhalb des Transportwagens 100 (in der Darstellung der Fig. 8 und 9 durch eine Drehung im Uhrzeigersinn). Die Verschlusssteuerkurven 222 nähern sich mit wachsendem Abstand von der jeweiligen Ausbuchtung 236, welche die Sicherheitsstellung der Verschlusssteuerungsvorrichtung 138 definiert, immer mehr der Drehachse 144 des Verschlusssteuerungselements 166 an, so dass die Verschlusselemente 208a und 208b mit zunehmendem Drehwinkel immer weiter zur Drehachse 144 hin gezogen werden (gegen die Rückstellkraft der Vorspannelemente 210), bis die axialen Endabschnitte 180 der Verschlusselemente 208a und 208b, wie in Fig. 9 dargestellt, einen zweiten Endbereich der Verschlusssteuerkurven 222 erreichen und somit das Verschlusssteuerungselement 166 nicht mehr in derselben Richtung weitergedreht werden kann.

Bei Erreichen dieses zweiten Endbereichs sind die Verschlusselemente 208a und 208b von der in den Fig. 10 und 12 dargestellten Zurückhaltestellung in die in den Fig. 11 und 13 dargestellte Freigabestellung überführt, in welcher die Tür 128, beispielsweise durch Ziehen am Betätigungsgriff 142, geöffnet werden kann, weil die Spitzen 198 der Verschlussriegel 186 nicht mehr in Eingriff mit den jeweils zugeordneten Aufnahmeausnehmungen 200 stehen.

Wird das Betätigungselement 140 in der in Fig. 9 dargestellten Öffnungsstellung von der Bedienungsperson losgelassen, so bewirkt die Rückstellkraft der Vorspannelemente 210, dass sich das Verschlusssteuerungselement 166 (im gezeigten Ausführungsbeispiel im Gegenuhrzeigersinn) selbsttätig zurückdreht, bis die Sicherheitsstellung wieder erreicht ist und die axialen Endabschnitte 180 der Verschlusselemente 208a und 208b in der jeweils zugeordneten Ausbuchtung 228 der Verschlusssteuerkurve 222 einrasten.

Bei einer Variante der vorstehend beschriebenen Ausführungsform eines Transportwagens 100 mit integrierter Sicherheitsfunktion zum Öffnen der Tür 128 von innen sind die Vorspannelemente 210 nicht als Zugfedern 212, sondern als Druckfedern ausgebildet, welche bei der Überführung der Verschlussvorrichtung 136 von der Zurückhaltestellung in die Freigabestellung komprimiert werden.

Ferner kann vorgesehen sein, dass die als Vorspannelemente 210 dienenden Zugfedern oder Druckfedern nicht im korpusseitigen Endbereich der Verschlusselemente 208a und 208b, sondern im Bereich des Verschlusssteuerungselements 166 angeordnet sind.

## Patentansprüche

1. Transportwagen, umfassend einen Korpus (102), mindestens eine Tür (128) und eine Verschlussvorrichtung (136) zum Zurückhalten der Tür (128) in einer Schließstellung der Tür (128) und einer Zurückhaltestellung der Verschlussvorrichtung (136),
**dadurch gekennzeichnet,**
**dass** der Transportwagen (100) eine Verschlusssteuerungsvorrichtung (138) umfasst, die eine Arretierstellung aufweist, in welcher die Verschlusssteuerungsvorrichtung (138) so mit der Verschlussvorrichtung (136) zusammenwirkt, dass die Verschlussvorrichtung (136) in ihrer Zurückhaltestellung arretiert ist,
und eine Sicherheitsstellung, in welcher die Verschlusssteuerungsvorrichtung (138) so mit der Verschlussvorrichtung (136) zusammenwirkt, dass die Verschlussvorrichtung (136) von ihrer Zurückhaltestellung in eine Freigabestellung bewegbar und die Tür (128) von einem Innenraum (110) des Korpus (102) aus zu öffnen ist.

2. Transportwagen nach Anspruch 1, **dadurch gekennzeichnet, dass** die Tür (128) in der Sicherheitsstellung durch Ausüben eines Drucks auf eine dem Innenraum (110) des Korpus (102) zugewandte Innenseite der Tür (128) zu öffnen ist.

3. Transportwagen nach einem der Ansprüche 1 oder 2, **dadurch gekennzeichnet, dass** der Transportwagen (100) mindestens ein Vorspannelement (210) umfasst, welches in der Sicherheitsstellung der Verschlusssteuerungsvorrichtung (138) die Verschlussvorrichtung (136) in ihre Zurückhaltestellung vorspannt.

4. Transportwagen nach Anspruch 3, **dadurch gekennzeichnet, dass** mindestens ein Vorspannelement (210) ein Federelement umfasst.

5. Transportwagen nach einem der Ansprüche 1 bis 4, **dadurch gekennzeichnet, dass** die Verschlusssteuerungsvorrichtung (138) eine Öffnungsstellung aufweist, in welcher die Verschlusssteuerungsvorrichtung (138) so mit der Verschlussvorrichtung (136) zusammenwirkt, dass die Verschlussvorrichtung (136) sich in einer Freigabestellung befindet, in welcher die Tür von innen und/oder von außen zu öffnen ist.

6. Transportwagen nach Anspruch 5, **dadurch gekennzeichnet, dass** die Verschlusssteuerungsvorrichtung (138) ein Betätigungselement (140) umfasst, das von außerhalb des Transportwagens (100) für eine Betätigung zugänglich ist,
wobei durch Betätigung des Betätigungselements (140) die Verschlusssteuerungsvorrichtung (138) von der Sicherheitsstellung in die Öffnungsstellung überführbar ist.

7. Transportwagen nach Anspruch 6, **dadurch gekennzeichnet, dass** die Verschlusssteuerungsvorrichtung (138) durch Drehung eines Verschlusssteuerungselements (166) zwischen der Arretierstellung, der Sicherheitsstellung und der Öffnungsstellung überführbar ist.

8. Transportwagen nach einem der Ansprüche 5 bis 7, **dadurch gekennzeichnet, dass** der Transportwagen (100) mindestens ein Vorspannelement (210) umfasst, welches die Verschlusssteuerungsvorrichtung (138) von der Öffnungsstellung in die Sicherheitsstellung zurückbewegt.

9. Transportwagen nach einem der Ansprüche 1 bis 8, **dadurch gekennzeichnet, dass** die Verschlusssteuerungsvorrichtung (138) ein Betätigungselement (140) umfasst, das von außerhalb des Transportwagens (100) für eine Betätigung zugänglich ist,
wobei durch Betätigung des Betätigungselements (140) die Verschlusssteuerungsvorrichtung (138) von der Sicherheitsstellung in die Arretierstellung und/oder von der Arretierstellung in die Sicherheitsstellung überführbar ist.

10. Transportwagen nach einem der Ansprüche 1 bis 9, **dadurch gekennzeichnet, dass** die Verschlusssteuerungsvorrichtung (138) eine Sicherheitsstellungs-Rastvorrichtung (238) zum Verrasten der Verschlusssteuerungsvorrichtung (138) in der Sicherheitsstellung und/oder eine Arretierstellungs-Rastvorrichtung (224) zum Verrasten der Verschlusssteuerungsvorrichtung (138) in der Arretierstellung umfasst.

11. Transportwagen nach einem der Ansprüche 1 bis 10, **dadurch gekennzeichnet, dass** die Verschlussvorrichtung (136) mindestens ein Verschlusselement (208, 208b) umfasst, das in der Zurückhaltestellung der Verschlussvorrichtung (136) so mit dem Korpus (102) zusammenwirkt, dass die Tür (128) in ihrer Schließstellung zurückgehalten wird.

12. Transportwagen nach Anspruch 11, **dadurch gekennzeichnet, dass** die Verschlussvorrichtung (136) mindestens zwei Verschlusselemente (208a, 208b) umfasst, die in der Zurückhaltestellung der Verschlussvorrichtung (136) so mit dem Korpus (102) zusammenwirken, dass die Tür (128) in ihrer Schließstellung zurückgehalten wird,
wobei zwei dieser Verschlusselemente (208a, 208b) sich von der Verschlusssteuerungsvorrichtung (138) aus in einander entgegengesetzte Richtungen erstrecken.

13. Transportwagen nach Anspruch 12, **dadurch gekennzeichnet, dass** mindestens zwei Verschlusselemente (208a, 208b) über die Verschlusssteuerungsvorrichtung (138) so miteinander gekoppelt sind, dass sie gleichzeitig in Eingriff und/oder außer Eingriff mit dem Korpus (102) bringbar sind.

14. Transportwagen nach einem der Ansprüche 1 bis 13, **dadurch gekennzeichnet, dass** die Verschlusssteuerungsvorrichtung (138) mindestens ein drehbar gehaltenes Verschlusssteuerungselement (166) umfasst.

15. Transportwagen nach Anspruch 14, **dadurch gekennzeichnet, dass** das Verschlusssteuerungselement (166) mindestens eine Verschlusssteuerkurve (222) umfasst, mit welcher mindestens ein Verschlusselement (208a, 208b) der Verschlussvorrichtung (136) in der Arretierstellung und in der Sicherheitsstellung der Verschlusssteuerungsvorrichtung (138) in Eingriff steht.

16. Transportwagen nach Anspruch 15, **dadurch gekennzeichnet, dass** in der Arretierstellung der Verschlusssteuerungsvorrichtung (138) das Verschlusselement (208a, 208b) nicht relativ zu der Verschlusssteuerkurve (222) bewegbar ist und in der Sicherheitsstellung der Verschlusssteuerungsvorrichtung (138) das Verschlusselement (208a, 208b) relativ zu der Verschlusssteuerkurve (222) bewegbar ist.

## Claims

1. A trolley, comprising a body (102), at least one door (128), and a locking device (136) for retaining the door (128) in a closed position of the door (128) and a retaining position of the locking device (136),
**characterised in that**
the trolley (100) comprises a locking control device (138), which has a locking position, in which the locking control device (138) cooperates with the locking device (136) such that the locking device (136) is locked in its retaining position,
and a safety position, in which the locking control device (138) cooperates with the locking device (136) such that the locking device (136) is movable from its retaining position into a release position and the door (128) can be opened out from an interior (110) of the body (102).

2. A trolley according to claim 1, **characterised in that** the door (128) in the safety position can be opened by exerting a pressure onto an inner side of the door (128) facing towards the interior (110) of the body (102).

3. A trolley according to either one of claims 1 or 2, **characterised in that** the trolley (100) comprises at least one biaising element (210), which in the safety position of the locking control device (138) biases the locking device (136) into its retaining position.

4. A trolley according to claim 3, **characterised in that** at least one biaising element (210) comprises a spring element.

5. A trolley according to any one of claims 1 to 4, **characterised in that** the locking control device (138) has an open position, in which the locking control device (138) cooperates with the locking device (136) such that the locking device (136) is in a release position, in which the door can be opened from the inside and/or from the outside.

6. A trolley according to claim 5, **characterised in that** the locking control device (138) comprises an actuation element (140), which, for an actuation, is accessible from outside the trolley (100),
wherein, by actuation of the actuation element (140), the locking control device (138) is transferable from the safety position into the open position.

7. A trolley according to claim 6, **characterised in that** the locking control device (138) is transferable between the locking position, the safety position and the open position by rotation of a locking control element (166).

8. A trolley according to any one of claims 5 to 7, **characterised in that** the trolley (100) comprises at least one biasing element (210), which moves the locking control device (138) back from the open position into the safety position.

9. A trolley according to any one of claims 1 to 8, **characterised in that** the locking control device (138) comprises an actuation element (140), which, for an actuation, is accessible from outside the trolley (100), wherein, by actuation of the actuation element (140), the locking control device (138) is transferable from the safety position into the locking position and/or from the locking position into the safety position.

10. A trolley according to any one of claims 1 to 9, **characterised in that** the locking control device (138) comprises a safety position detent device (238) for latching the locking control device (138) in the safety position and/or a locking position detent device (224) for latching the locking control device (138) in the locking position.

11. A trolley according to any one of claims 1 to 10, **characterised in that** the locking device (136) comprises at least one locking element (208, 208b), which in the retaining position of the locking device (136) cooperates with the body (102) such that the door (128) is retained in its closed position.

12. A trolley according to claim 11, **characterised in that** the locking device (136) comprises at least two locking elements (208a, 208b), which in the retaining position of the locking device (136) cooperate with the body (102) such that the door (128) is retained in its closed position, wherein two of these locking elements (208a, 208b) extend in opposite directions from the locking control device (138).

13. A trolley according to claim 12, **characterised in that** at least two locking elements (208a, 208b) are coupled to one another by means of the locking control device (138) such that they can be brought simultaneously into engagement and/or out of engagement with the body (102).

14. A trolley according to any one of claims 1 to 13, **characterised in that** the locking control device (138) comprises at least one rotatably held locking control element (166).

15. A trolley according to claim 14, **characterised in that** the locking element (166) comprises at least one locking control cam (222), with which at least one locking element (208a, 208b) of the locking device (136) is engaged in the locking position and in the safety position of the locking control device (138).

16. A trolley according to claim 15, **characterised in that** in the locking position of the locking control device (138) the locking element (208a, 208b) is not movable relative to the locking control cam (222), and in the safety position of the locking control device (138) the locking element (208a, 208b) is movable relative to the locking control cam (222).

## Revendications

1. Chariot de transport, comprenant un corps (102), au moins une porte (128) et un dispositif de fermeture (136) destiné à retenir la porte (128) dans une position de fermeture de celle-ci (128) et dans une position de retenue du dispositif de fermeture (136), **caractérisé en ce que** le chariot (100) de transport comprend un dispositif de commande de la fermeture (138) présentant une position d'arrêt dans laquelle le dispositif de commande de la fermeture (138) coopère avec le dispositif de fermeture (136) de manière à arrêter le dispositif de fermeture (136) dans sa position de retenue, et une position de sécurité dans laquelle le dispositif de commande de la fermeture (138) coopère avec le dispositif de fermeture (136) de manière à ce que le dispositif de fermeture (136) puisse être déplacé depuis sa position de retenue dans une position de déblocage et à ce que la porte (128) puisse être ouverte à partir de l'intérieur (110) du corps (102).

2. Chariot de transport selon la revendication 1, **caractérisé en ce que** la porte (128) peut être ouverte, en position de sécurité, grâce à l'exercice d'une pression sur un côté intérieur de celle-ci (128) tourné vers l'intérieur (110) du corps (102).

3. Chariot de transport selon l'une quelconque des revendications 1 ou 2, **caractérisée en ce que** le chariot (100) de transport comprend au moins un élément de précontrainte (210) qui, lorsque le dispositif de commande de la fermeture (128) est en position de sécurité, précontraint le dispositif de fermeture (136) dans sa position de retenue.

4. Chariot de transport selon la revendication 3, **caractérisé en ce qu'**au moins un élément de précontrainte (210) comporte un élément de ressort.

5. Chariot de transport selon l'une quelconque des revendications 1 à 4, **caractérisé en ce que** le dispositif de commande de la fermeture (138) présente une position d'ouverture dans laquelle le dispositif de commande de la fermeture (138) coopère avec le dispositif de fermeture (136) de manière à ce que le dispositif de fermeture (136) se trouve dans une position de déblocage où la porte peut être ouverte depuis l'intérieur et/ou depuis l'extérieur.

6. Chariot de transport selon la revendication 5, **caractérisé en ce que** le dispositif de commande de la fermeture (138) comporte un élément d'actionnement (140) accessible depuis l'extérieur du chariot (100) de transport pour un actionnement, l'actionnement de l'élément d'actionnement (140) permettant de transférer le dispositif de commande de la fermeture (138) depuis la position de sécurité en position d'ouverture.

7. Chariot de transport selon la revendication 6, **caractérisé en ce que** le dispositif de commande de la fermeture (138) peut être basculé entre la position d'arrêt, la position de sécurité et la position d'ouverture grâce à la rotation d'un élément de commande de la fermeture (166).

8. Chariot de transport selon l'une quelconque des revendications 5 à 7, **caractérisé en ce que** le chariot de transport (100) comporte au moins un élément de précontrainte (210) qui remet le dispositif de commande de la fermeture (138) en position de sécurité depuis la position d'ouverture.

9. Chariot de transport selon l'une quelconque des revendications 1 à 8, **caractérisé en ce que** le dispositif de commande de la fermeture (138) comporte un élément d'actionnement (140) accessible depuis l'extérieur du chariot de transport (100) pour un actionnement, l'actionnement de l'élément d'actionnement (140) permettant de transférer le dispositif de commande de la fermeture (138) depuis la position de sécurité en position d'arrêt et/ou depuis la position d'arrêt en position de sécurité.

10. Chariot de transport selon l'une quelconque des revendications 1 à 9, **caractérisé en ce que** le dispositif de commande de la fermeture (138) comporte un dispositif d'encliquetage de la position de sécurité (238) pour encliqueter le dispositif de commande de la fermeture (138) en position de sécurité et/ou un dispositif d'encliquetage de la position d'arrêt (224) pour encliqueter le dispositif de commande de la fermeture (138) en position d'arrêt.

11. Chariot de transport selon l'une quelconque des revendications 1 à 10, **caractérisé en ce que** le dispositif de fermeture (136) comporte au moins un élément de fermeture (208, 208b) qui, lorsque le dispositif de fermeture (136) est en position de retenue, coopère avec le corps (102) de manière à ce que la porte (128) soit retenue dans sa position de fermeture.

12. Chariot de transport selon la revendication 11, **caractérisé en ce que** le dispositif de fermeture (136) comporte au moins deux éléments de fermeture (208a, 208b) qui, lorsque le dispositif de fermeture (136) est en position de retenue, coopère avec le corps (102) de manière à ce que la porte (128) soit retenue dans sa position de fermeture,
deux de ces éléments de fermeture (208a, 208b) s'étendant depuis le dispositif de commande de la fermeture (138) dans des directions opposées.

13. Chariot de transport selon la revendication 12, **caractérisé en ce qu'**au moins deux éléments de fermeture (208a, 208b) sont couplés ensemble par l'intermédiaire du dispositif de commande de la fermeture (138) de manière à pouvoir s'engager et/ou se désengager en même temps avec le corps (102).

14. Chariot de transport selon l'une quelconque des revendications 1 à 13, **caractérisé en ce que** le dispositif de commande de la fermeture (138) comporte au moins un élément de commande de la fermeture (166) maintenu en rotation.

15. Chariot de transport selon la revendication 14, **caractérisé en ce que** l'élément de commande de la fermeture (166) comporte au moins une courbe de commande de la fermeture (222) permettant à au moins un élément de fermeture (208a, 208b) du dispositif de fermeture (136) d'être engagé lorsque le dispositif de commande de la fermeture (138) est en position d'arrêt et en position de sécurité.

16. Chariot de transport selon la revendication 15, **caractérisé en ce que**, lorsque le dispositif de commande de la fermeture (138) est en position d'arrêt, l'élément de fermeture (208a, 208b) ne peut pas être déplacé par rapport à la courbe de commande de la fermeture (122) et, lorsque le dispositif de commande de la fermeture (138) est en position de sécurité, l'élément de fermeture (208a, 208b) peut être déplacé par rapport à la courbe de commande de la fermeture (222).
